# EUROPÄISCHE PATENTSCHRIFT

(11) **EP 2 496 804 B1**
(45) Veröffentlichungstag und Bekanntmachung des Hinweises auf die Patenterteilung: **12.03.2014**
(21) Anmeldenummer: 10778563.6
(22) Anmeldetag: 04.11.2010
(51) Int. Cl.: F02B 29/04, F02B 37/013, F02B 67/10

(54) **LADER-LADELUFTKÜHLER-BAUGRUPPE**
CHARGER/INTERCOOLER ASSEMBLY
MODULE TURBOCOMPRESSEUR-REFROIDISSEUR D'AIR DE SURALIMENTATION

(30) Priorität: 06.11.2009 DE 102009052166
(43) Veröffentlichungstag der Anmeldung: 12.09.2012
(73) Patentinhaber: MTU Friedrichshafen GmbH, 88045 Friedrichshafen (DE)
(72) Erfinder: HIRY, Johannes, 88069 Tettnang (DE); REITZ, Jörg, Andre, 88682 Salem (DE); WIEDMANN, Martin, 78467 Konstanz (DE)
(74) Vertreter: Winter, Josef
(86) Internationale Anmeldenummer: PCT/EP2010/006721
(87) Internationale Veröffentlichungsnummer: WO 2011/054515

(56) Entgegenhaltungen:
- EP-A2- 1 998 022
- WO-A1-2010/076383
- CH-A- 241 269
- DE-A1- 1 526 448
- DE-A1- 2 006 064
- DE-A1- 10 118 951
- DE-A1-102007 010 123
- DE-C1- 19 756 985
- US-A- 5 544 486
- US-A1- 2002 056 444

## Beschreibung

Die vorliegende Erfindung betrifft eine Lader-Ladeluftkühler-Baugruppe gemäß dem Oberbegriff des Patentanspruchs 1, sowie eine Brennkraftmaschine gemäß dem Oberbegriff des Patentanspruchs 12.

Brennkraftmaschinen sind in der heutigen Zeit in mannigfaltigen Gebieten der Technik im Einsatz, wie beispielsweise zur Erzeugung von Energie oder auch im Bereich der Kraftfahrzeuge, wo sie für einen Antrieb derselben sorgen. Zur Leistungssteigerung und/oder zur Erhöhung des Wirkungsgrades kommen bei modernen Brennkraftmaschinen Vorrichtungen zur Vorverdichtung der Ladeluft (Lader) zum Einsatz. Ein Beispiel hierfür sind Abgasturbolader, welche vom Abgasstrom der Brennkraftmaschine angetrieben die Ladeluft derselben vorverdichten.

Neben Brennkraftmaschinen mit einstufiger Aufladung (ein Abgasturbolader) sind auch solche mit einer zweistufigen Aufladung durch einen ersten und einen zweiten Abgasturbolader bekannt. Bei einer zweistufigen Aufladung werden ein Hochdrucklader und ein Niederdrucklader in Reihe geschaltet, wobei der Abgasstrom beide Turbolader durchströmt und somit antreibt. Zu einer weiteren Leistungssteigerung und/oder Erhöhung des Wirkungsgrades ist es bekannt, die vorverdichtete Ladeluft in einem Ladeluftkühler zu kühlen (Lader-Ladeluftkühler-Baugruppe). Ein Beispiel für eine Vorrichtung zur Ladeluftkühlung ist aus der Druckschrift DE 10 2007 010 123 A1 bekannt.

In der Regel werden der oder die Abgasturbolader sowie auch der Ladeluftkühler an der Brennkraftmaschine befestigt, was sich jedoch in vielen Fällen als unzureichend herausgestellt hat, da die auf die Lader-Ladeluftkühler-Baugruppe wirkenden Kräfte (z.B. Schwingungen bzw. Vibrationen des Systems) oftmals zu einem schnellen Verschleiß der Lader-Ladeluftkühler-Baugruppe führen. Insbesondere die Verbindung zwischen Turbolader und Ladeluftkühler unterliegt hohen Belastungen, was zu einem schnellen Verschleiß der Verbindung führt.

Aufgabe der vorliegenden Erfindung ist es, eine Lader-Ladeluftkühler-Baugruppe anzugeben, welche im Vergleich zum Stand der Technik eine höhere Haltbarkeit bzw. Standfestigkeit insbesondere hinsichtlich auftretender Schwingungen bzw. Vibrationen aufweist. Weiterhin ist es Aufgabe der vorliegenden Erfindung, eine Brennkraftmaschine anzugeben, welche die vorstehend erwähnten Eigenschaften aufweist.

Diese Aufgabe wird erfindungsgemäß durch eine Lader-Ladeluftkühler-Baugruppe mit den Merkmalen des Anspruchs 1 und eine Brennkraftmaschine mit den Merkmalen des Anspruchs 12 gelöst.

Eine erfindungsgemäße Lader-Ladeluftkühler-Baugruppe einer Brennkraftmaschine umfasst demnach wenigstens einen Lader und einen Ladeluftkühler, wobei der Lader einen Halter zur Anbringung des Laders an der Brennkraftmaschine aufweist und wobei der Ladeluftkühler eine Befestigungsvorrichtung zur Befestigung desselben an der Brennkraftmaschine aufweist, wobei weiterhin die Lader-Ladeluftkühler-Baugruppe eine Abstützvorrichtung zur Abstützung des Laders am Ladeluftkühler aufweist.

Dadurch werden die auf die Lader-Ladeluftkühler-Baugruppe wirkenden Belastungen wie beispielsweise Schwingungen, die einerseits von der Brennkraftmaschine und andererseits vom Lader herrühren, verringert, was zu einer erhöhten Lebensdauer der Baugruppe, sowie zu einer sicheren Anbringung derselben an der Brennkraftmaschine beiträgt.

Bei der erfindungsgemäßen Lader-Ladeluftkühler-Baugruppe kann es sich um eine Baugruppe mit einem oder mehreren Ladern handeln, welche parallel zueinander oder in Serie geschalten (mehrstufige Aufladung) sind. Als Lader sind beispielsweise Abgasturbolader, mechanische Lader bzw. Kompressoren oder andere Vorrichtungen, welche eine Vorverdichtung von Ladeluft gewährleisten können, denkbar. Beim Ladeluftkühler der Baugruppe kann es sich um den einzigen in der Brennkraftmaschine vorhandenen Ladeluftkühler handeln; denkbar ist es aber auch, dass es sich beispielsweise (wie in der im Rahmen der untenstehenden Figurenbeschreibung diskutierten beispielhaften Ausführungsform einer erfindungsgemäßen Lader-Ladeluftkühler-Baugruppe) um einen Zwischenladeluft-Kühler handelt, der die in einer Verdichterstufe vorverdichtete Ladeluft kühlt, bevor diese in einer weiteren Verdichterstufe nochmals verdichtet und anschließend in einem weiteren Ladeluftkühler nochmals gekühlt wird.

In einer möglichen Ausführungsform ist die Abstützvorrichtung an dem Halter des Laders, mit welchem der Lader an der Brennkraftmaschine befestigt ist und an der Befestigungsvorrichtung des Luftkühlers, an welcher dieser angebracht ist, befestigt.

Die Abstützvorrichtung kann ein gewinkeltes Blech aufweisen, welches zur Befestigung an dem Halter des Laders und an der Befestigungsvorrichtung des Ladeluftkühlers entsprechende Aussparungen, vorzugsweise Bohrungen aufweisen kann. Zur Befestigung können beispielsweise Schrauben oder Bolzen dienen; denkbar ist auch eine Befestigung mittels Schweißens oder mittels einer anderen hierfür geeigneten und dem Fachmann bekannten Technik.

Optional weist die Lader-Ladeluftkühler-Baugruppe zwei Lader, insbesondere Abgasturbolader auf. Dabei können der erste Lader ein Niederdruckabgasturbolader und der zweite Lader ein Hochdruckabgasturbolader sein. Der Niederdruckabgasturbolader kann in einer möglichen Ausführungsform mittels eines Niederdruckabgasturboladerhalters an einem Zylinderkopf der Brennkraftmaschine befestigbar sein, während der Hochdruck-Abgasturbolader mittels eines Hochdruck-Abgasturboladerhalters an einem Kurbelgehäuse der Brennkraftmaschine befestigbar sein kann.

Dabei ist die Befestigungsvorrichtung in einer möglichen Ausführungsform einer erfindungsgemäßen Lader-Ladeluftkühler-Baugruppe einerseits an einem Kurbelgehäuse oder einem mit dem Kurbelgehäuse der Brennkraftmaschine in Verbindung stehenden Bauteil der Brennkraftmaschine (beispielsweise einer Halterung oder dgl.) und andererseits an einem der beiden Lader, insbesondere an dem Hochdruckabgasturbolader oder einem mit diesem in Verbindung stehenden Bauteil, insbesondere an dem Hochdruck-Abgasturboladerhalter befestigbar.

Die Befestigungsvorrichtung kann plattenartig als Tragplatte ausgebildet sein und weiterhin optional Kanäle zur Versorgung des Ladeluftkühlers mit Kühlmittel aufweisen. Einer der Kanäle kann dabei eine Ladeluftkühlervorlauföffnung aufweisen, während ein weiterer Kanal eine Ladeluftkühlerrücklauföffnung aufweist, wobei an der Ladeluftkühlervorlauföffnung und/oder an der Ladeluftkühlerrücklauföffnung Steckeinpassungen ausgebildet sein können. Alternativ oder zusätzlich hierzu kann der Ladeluftkühler eine Ladeluftkühlereinlassöffnung und eine Ladeluftkühlerauslassöffnung aufweisen, wobei die Ladeluftkühlereinlassöffnung und/oder die Ladeluftkühlerauslassöffnung eine Steckeinpassung aufweisen.

Zur Verstärkung und zur Versteifung der Befestigungsvorrichtung weist diese in einer weiteren möglichen Ausbildung Versteifungsrippen auf.

Es ist ferner im Gedanken der Erfindung enthalten, eine erfindungsgemäße Lader-Ladeluftkühler-Baugruppe in einer Brennkraftmaschine zu verwenden.

Weitere Merkmale und Vorteile der Erfindung ergeben sich aus der nachfolgenden Beschreibung von Ausführungsbeispielen der Erfindung, anhand der Figuren der Zeichnungen, die erfindungswesentliche Einzelheiten zeigen, und aus den Ansprüchen. Die einzelnen Merkmale können je einzeln für sich oder zu mehreren in beliebiger Kombination bei einer Variante der Erfindung verwirklicht sein.

Eine beispielhafte Ausführungsform der Erfindung wird nachfolgend anhand der beigefügten Zeichnungen näher erläutert. Es zeigen:
Fig. 1 einen Ladeluftkühler einer beispielhaften Ausführungsform einer erfindungsgemäßen Lader-Ladeluftkühler-Baugruppe samt Befestigungsvorrichtung in einer teilweisen Explosionsdarstellung;
Fig. 2 die Befestigungsvorrichtung gemäß Fig. 1 in einer perspektivischen Ansicht von unten;

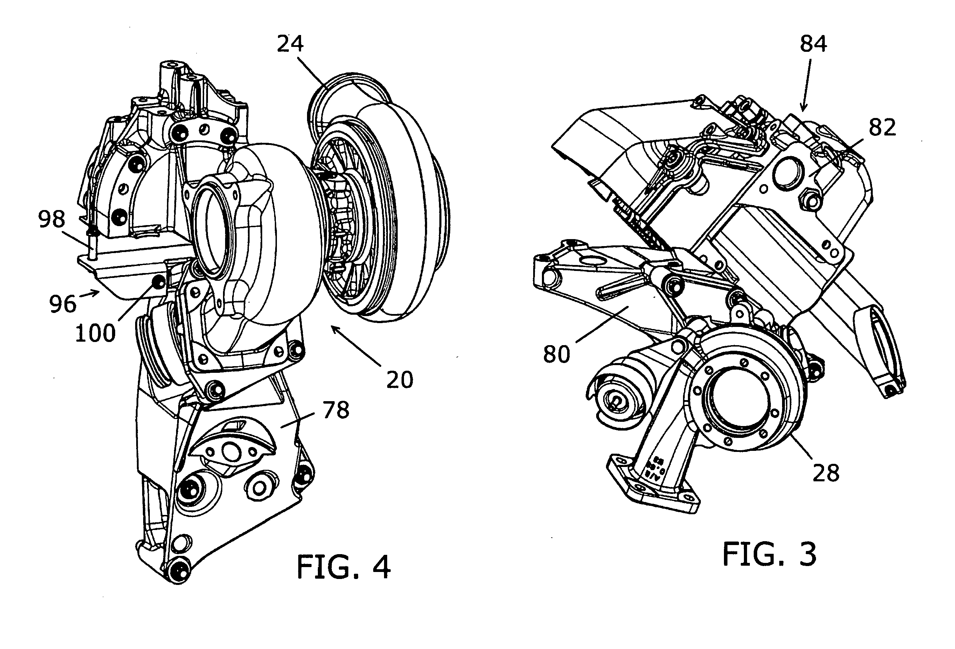

Fig. 3 einen Hochdruck-Abgasturbolader der Lader-Ladeluftkühler-Baugruppe gemäß der beispielhaften Ausführungsform zusammen mit einem Ausschnitt einer Brennkraftmaschine in einer perspektivischen Darstellung;
Fig. 4 einen Niederdruck-Abgasturbolader gemäß der beispielhaften Ausführungsform der Lader-Ladeluftkühler-Baugruppe in einer perspektivischen Darstellung;
Fig. 5 die Lader-Ladeluftkühler-Baugruppe gemäß der beispielhaften Ausführungsform in einer perspektivischen Ansicht;

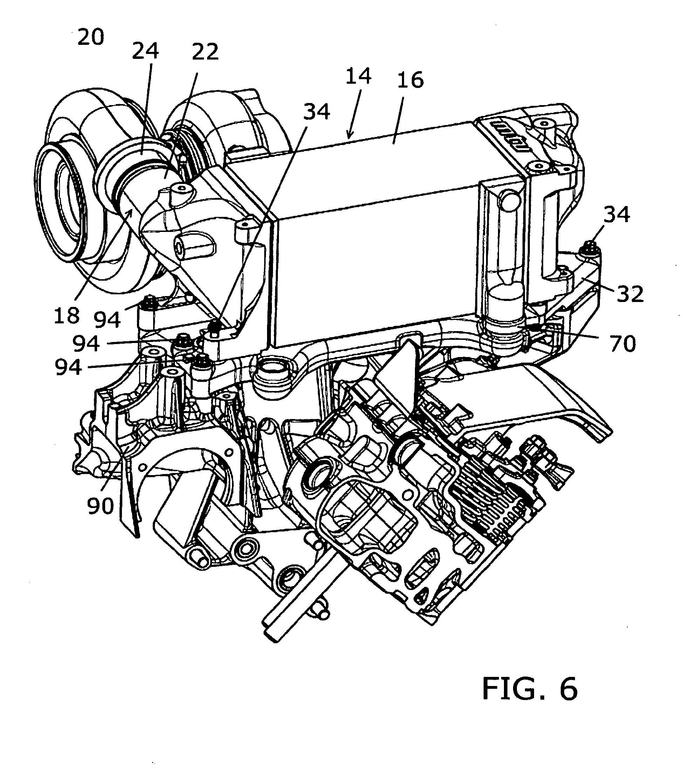

Fig. 6 eine Ansicht gemäß Fig. 5 in einer weiteren Perspektive;

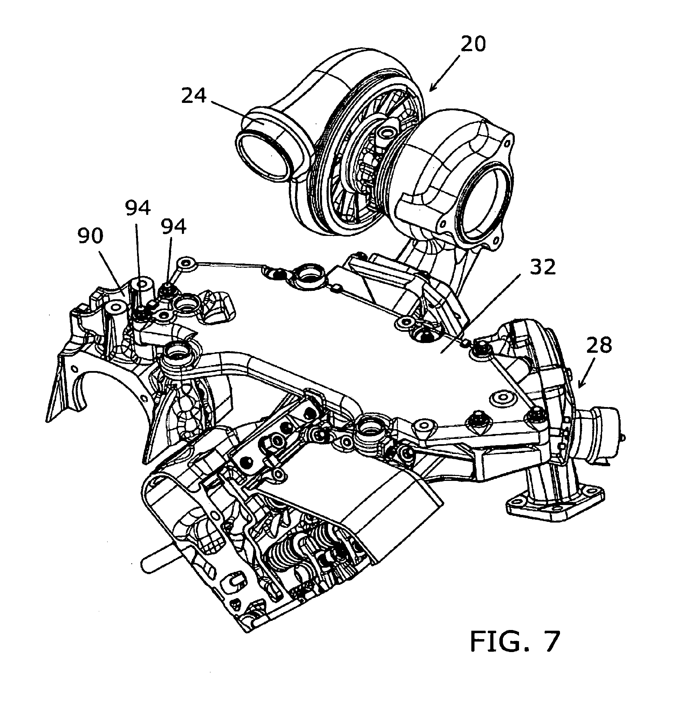

Fig. 7 die Lader-Ladeluftkühler-Baugruppe (ohne Ladeluftkühler) gemäß der beispielhaften Ausführungsform in einer perspektivischen Ansicht; und

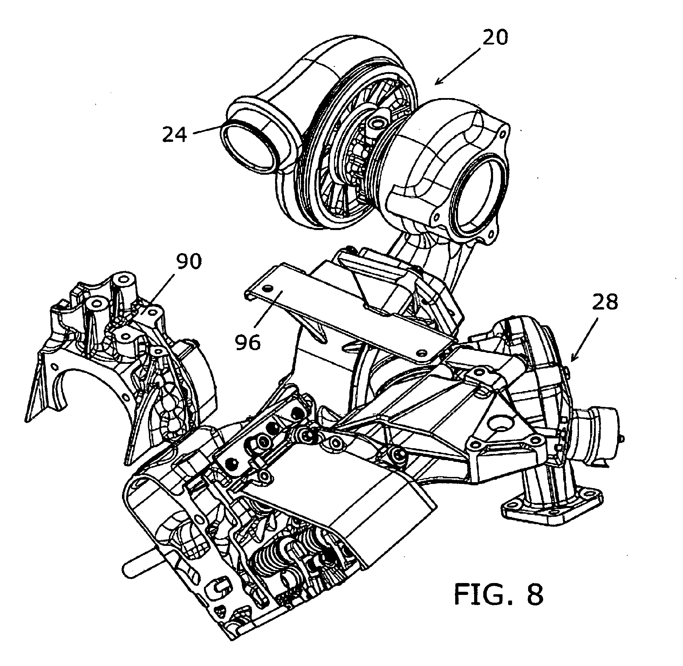

Fig. 8 Teile der Lader-Ladeluftkühler-Baugruppe gemäß der beispielhaften Ausführungsform in einer perspektivischen Ansicht.

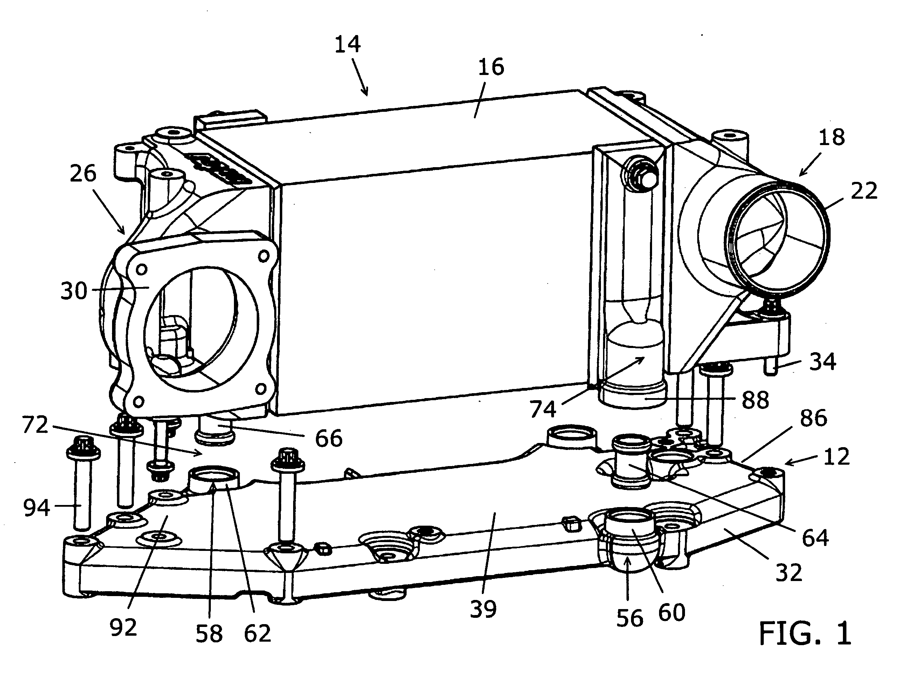

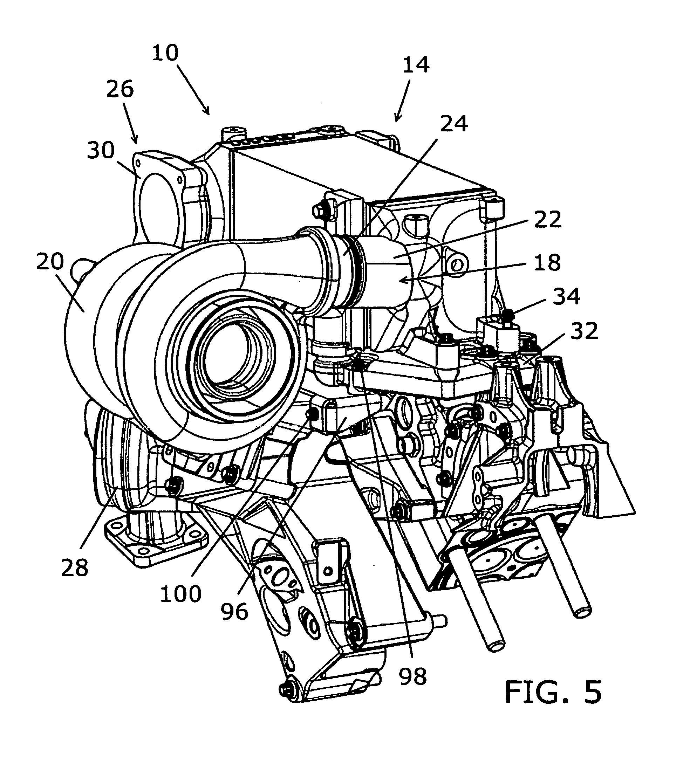

In Fig. 1 ist ein Ladeluftkühler einer beispielhaften Ausführungsform einer erfindungsgemäßen Lader-Ladeluftkühler-Baugruppe 10 samt Befestigungsvorrichtung 12 in einer teilweisen Explosionsdarstellung dargestellt, wobei der Ladeluftkühler in der beschriebenen Ausführungsform als Zwischenladeluft-Kühler 14 einer zweistufig aufgeladenenen Brennkraftmaschine ausgelegt ist. Der Zwischenladeluft-Kühler 14 weist ein in etwa quaderförmges Gehäuse 16 auf, an welchem ein Ladelufteinlass 18 angeordnet ist, über welchen die von einem Niederdruckabgasturbolader 20 zur Verfügung gestellte erwärmte Ladeluft in den Zwischenladeluft-Kühler 14 eintritt. Der Ladelufteinlass 18 weist hierfür ein rohrförmiges Anschlusstück 22 auf, über das er mit einem korrespondierenden Niederdruckabgasturbolader-Auslass 24 des Niederdruckabgasturboladers 20 in Verbindung steht (vgl. hierzu auch Fig. 5).

Im Inneren des Zwischenladeluft-Kühlers 14 ist ein Wärmetauscher angeordnet, bei dessen Durchströmen die zugeführte Ladeluft gekühlt wird, bevor sie den Zwischenladeluft-Kühler 14 über einen Ladeluftauslass 26 wieder verlässt. Vom Zwischenladeluft-Kühler 14 wird die gekühlte Ladeluft über den Ladeluftauslass 26 in einen weiteren Ladelufteinlass (in den Figuren nicht dargestellt) eines Hochdruckabgasturboladers 28 (in der Folge zur besseren Unterscheidbarkeit HD-Ladelufteinlass genannt) geleitet. Hierzu ist am Ladeluftauslass 26 des Zwischenladeluft-Kühlers 14 ein Flansch 30 angeordnet, an den der HD-Ladelufteinlass mittels eines korrespondierenden am Hochdruckabgasturbolader 28 ausgebildeten Flansches angeflanscht ist (die Verbindung zwischen Ladeluftkühler und Hochdruckabgasturbolader aus den Figuren nicht ersichtlich). Vom Hochdruckabgasturbolader 28 wird die verdichtete Ladeluft in der dargestellten Ausführungsform über einen Hauptladeluftkühler der Verbrennung in der Brennkraftmaschine zugeführt (ebenfalls nicht in den Figuren dargestellt).

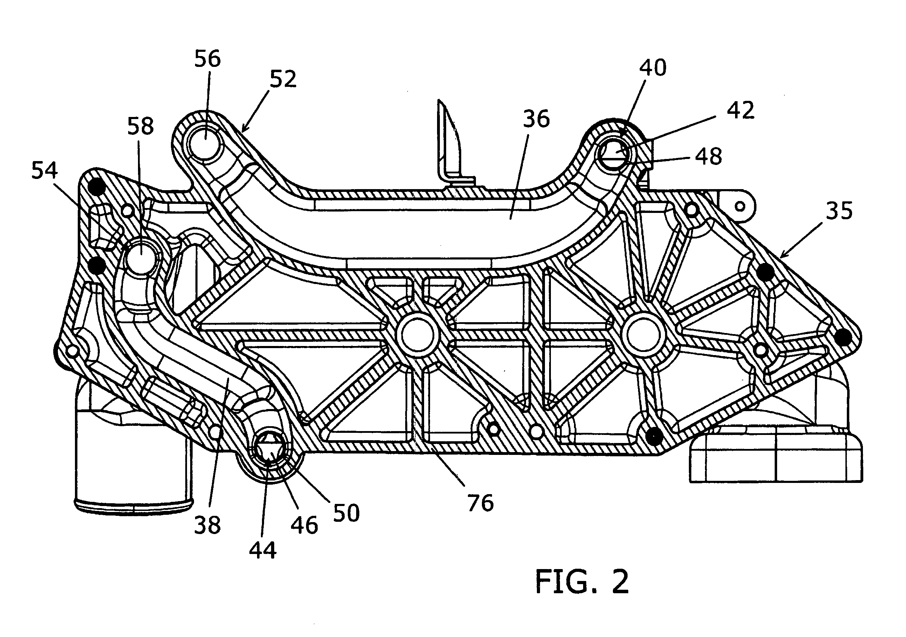

Die Befestigungsvorrichtung 12 des Zwischenladeluft-Kühlers 14 weist in der beschriebenen Ausführungsform eine Tragplatte 32 auf, auf deren Oberseite der Zwischenladeluft-Kühler 14 mittels Schrauben 34 befestigt ist. Zur Versorgung des Zwischenladeluft-Kühlers 14 mit Kühlmittel weist die Tragplatte 32 auf ihrer Unterseite 35 (vgl. hierzu Fig. 2) angeordnete Kanäle 36, 38 auf, welche im Betrieb der Brennkraftmaschine von Kühlmittel durchströmt werden. An einem ersten Ende 40 des ersten Kanals 36 ist eine zur Unterseite 35 der Tragplatte 32 hin geöffnete Kühlmittel-Einlassöffnung 42 ausgebildet, während an einem ersten Ende 44 des zweiten Kanals 38 eine ebenfalls zur Unterseite 35 der Tragplatte 32 hin geöffnete Kühlmittel-Auslassöffnung 46 ausgebildet ist. An der Kühlmittel-Einlassöffnung 42 und an der Kühlmittel-Auslassöffnung 46 sind röhrenförmige Anschlußstücke 48, 50 angeordnet, über welche die Kühlmittel-Einlassöffnung 42 und die Kühlmittel-Auslassöffnung 46 mittels geeigneter Anschlussvorrichtungen (z.B. Schlauch- oder Rohrschellen oder Schnellkupplungen) mit einem Zwischenladeluft-Kühlervorlauf und einem Zwischenladeluft-Kühlerrücklauf des Kühlmittelkreislaufs der Brennkraftmaschine in Fluidverbindung bringbar sind.

Die Kühlmittelversorgung des Zwischenladeluft-Kühlers 14 erfolgt an einem jeweils zweiten Ende 52, 54 der entsprechenden Kanäle 36, 38 über eine zur Oberseite 39 der Tragplatte 32 hin gewandte Zwischenladeluft-Kühlervorlauföffnung 56 und eine ebenfalls zur Oberseite 39 der Tragplatte 32 hin gewandte Zwischenladeluft-Kühlerrücklauföffnung 58. Sowohl an der Zwischenladeluft-Kühlervorlauföffnung 56 als auch an der Zwischenladeluft-Kühlerrücklauföffnung 58 sind Steckeinpassungen 60, 62 ausgebildet, in die Steckrohre 64, 66 eingepasst sind. Die Steckrohre 64, 66 sind weiterhin in korrespondierende Steckeinpassungen 68, 70, welche an einem Zwischenladeluft-Kühlervorlauf 72 und einem Zwischenladeluft-Kühlerrücklauf 74 des Zwischenladeluft-Kühlers 14 angebracht sind, eingepasst und stellen damit die Versorgung des Zwischenladeluft-Kühlers 14, genauer gesagt des Wärmetauschers des Zwischenladeluft-Kühlers 14, mit Kühlmittel sicher.

Neben den Kanälen 36, 38 weist die Tragplatte 32 auf ihrer Unterseite 35 Verstärkungsrippen 76 auf, welche zur Versteifung der Tragplatte 32 dienen. Dadurch ist eine stabile Struktur der Tragplatte 32 gewährleistet. Die Kanäle 36, 38 ermöglichen eine geringere Bauhöhe des Zwischenladeluft-Kühlers 14 samt der Tragplatte 32 (Zwischenladeluft-Kühlereinheit), da die Kühlmittelanschlüsse der Brennkraftmaschine an der Tragplatte 32 vorgesehen sind und nicht von unten dem Zwischenladeluft-Kühler 14 zugeführt werden müssen.

Wie bereits vorstehend erwähnt, weist die beschriebene Ausführungsform zwei Abgasturbolader, nämlich einen Niederdruckabgasturbolader 20 und einen Hochdruckabgasturbolader 28 auf. Beide Abgasturbolader sind über separate Halter, nämlich einen Niederdruck-Abgasturboladerhalter 78 und einen Hochdruck-Abgasturboladerhalter 80 (in der Folge kurz als ND-Halter und als HD-Halter bezeichnet) an der Brennkraftmaschine befestigt. Der Hochdruckabgasturbolader 28 ist über den HD-Halter 80 mittels Schrauben an einer Flanschfläche 82 des Zylinderkopfes 84 der Brennkraftmaschine befestigt, während der Niederdruckabgasturbolader 20 wiederum mittels Schrauben über den ND-Halter 78 am Kurbelgehäuse der Brennkraftmaschine angebracht ist.

Die Tragplatte 32, auf der der Zwischenladeluft-Kühler 14 befestigt ist, ist auf ihrer dem Niederdruck-Abgasturbolader 20 zugewandten Seite 86 mittels Schrauben 88 an einem Tragplattenträger 90 befestigt, der am Kurbelgehäuse bzw. einem am Kurbelgehäuse der Brennkraftmaschine angeordneten Geräteträger der Brennkraftmaschine angebracht (verschraubt) ist. Auf ihrer dem Hochdruckabgasturbolader 28 zugewandten Seite 92 ist die Tragplatte 32 am HD-Halter 80 angebracht (verschraubt mittels Schrauben 94), der wiederum, wie bereits vorstehend erwähnt, am Zylinderkopf 84 der Brennkraftmaschine angebracht ist. Zur Abstützung gegen Schwingungen der Baugruppe 10 ist der ND-Halter 78 über eine Abstützvorrichtung 96 in Form eines gewinkelten Bleches an der Tragplatte 32 abgestützt. Hierzu ist die Abstützvorrichtung 96 einerseits mit Schrauben 98 mit der Tragplatte 32 bzw. dem Tragplattenträger 90 und andererseits mit weiteren Schrauben 100 am ND-Halter 78 verschraubt. Alternativ hierzu ist es denkbar, dass die Abstützvorrichtung 96 am Niederdruckabgasturbolader 20 selbst befestigt ist. Auch eine Befestigung der Abstützvorrichtung 96 am Zwischenladeluft-Kühler 14, insbesondere an dessen Gehäuse 16 wäre denkbar. Durch diese Konstruktion werden die auf die Baugruppe 10 wirkenden Belastungen, insbesondere Vibrationen, verringert, was zu einer erhöhten Lebensdauer der Verbindung zwischen dem Niederdruckabgasturbolader 20 und dem Zwischenladeluft-Kühler 14 und zu einer sicheren Anbringung der gesamten Baugruppe 10 an der Brennkraftmaschine beiträgt.

Obwohl die Erfindung anhand einer Ausführungsform mit festen Merkmalskombinationen beschrieben wird, umfasst sie jedoch auch die denkbaren weiteren vorteilhaften Kombinationen, wie sie durch die Ansprüche angegeben sind. Sämtliche in den Anmeldungsunterlagen offenbar-ten Merkmale werden als erfindungswesentlich beansprucht, soweit sie einzeln oder in Kombination gegenüber dem Stand der Technik neu sind.

## Patentansprüche

1. Lader-Ladeluftkühler-Baugruppe (10) einer Brennkraftmaschine, welche wenigstens zwei Abgasturbolader (20, 28) und einen Ladeluftkühler (14) aufweist, wobei der erste Abgasturbolader (20) ein Niederdruckabgasturbolader (20) ist und der zweite Abgasturbolader (28) ein Hochdruckabgasturbolade (28) ist und wobei der Ladeluftkühler (14) eine Befestigungsvorrichtung (12) mit einer Tragplatte (32) zur Befestigung desselben an der Brennkraftmaschine aufweist, **dadurch gekennzeichnet, dass** der Niederdruckabgasturbolader (20) einen Niederdruck-Abgasturboladerhalter (78) und der Hochdruckabgasturbolader (28) einen Hochdruck- Abgasturboladerhalter (80) zur Anbringung an der Brennkraftmaschine aufweist, wobei die Lader-Ladeluftkühler-Baugruppe (10) eine Abstützvorrichtung (96) zur Abstützung des Niederdruck-Abgasturboladerhalters (78) des Niederdruckabgasturboladers (20) an der Tragplatte (32) aufweist und wobei der Hochdruck- Abgasturboladerhalter (80) an der Tragplatte (32) befestigt ist.

2. Lader-Ladeluftkühler-Baugruppe (10) nach Anspruch 1, **dadurch gekennzeichnet, dass** der Niederdruckabgasturbolader mittels des Niederdruck-Abgasturboladerhalters (78) an einem Kurbelgehäuse der Brennkraftmaschine befestigbar ist, während der Hochdruckabgasturbolader mittels des Hochdruck-Abgasturboladerhalters (80) an einem Zylinderkopf (84) der Brennkraftmaschine befestigbar ist.

3. Lader-Ladeluftkühler-Baugruppe (10) nach Anspruch 1 oder 2, **dadurch gekennzeichnet, dass** die Befestigungsvorrichtung (12) an dem Kurbelgehäuse oder einem mit dem Kurbelgehäuse der Brennkraftmaschine in Verbindung stehenden Bauteil der Brennkraftmaschine befestigbar ist.

4. Lader-Ladeluftkühler-Baugruppe (10) nach einem der vorangehenden Ansprüche, **dadurch gekennzeichnet, dass** die Befestigungsvorrichtung (12) Kanäle (36, 38) zur Versorgung des Ladeluftkühlers (14) mit Kühlmittel aufweist.

5. Lader-Ladeluftkühler-Baugruppe (10) nach Anspruch 4, **dadurch gekennzeichnet, dass** ein Kanal(36) eine Ladeluftkühler-Vorlauföffnung (56) und ein weiterer Kanal (38) eine Ladeluftkühler-Rücklauföffnung (58) aufweist, wobei an der Ladeluftkühlervorlauföffnung (56) und/oder an der Ladeluftkühlerrücklauföffnung (58) Steckeinpassungen (60, 62) ausgebildet sind.

6. Lader-Ladeluftkühler-Baugruppe (10) nach Anspruch 4 oder Anspruch 4, **dadurch gekennzeichnet, dass** der Ladeluftkühler (14) einen Ladeluftkühlervorlauf (72) und einen Ladeluftkühlerrücklauf (74) aufweist, wobei der Ladeluftkühlervorlauf (72) und/oder die Ladeluftkühlerrücklauf (74) eine Steckeinpassung aufweist.

7. Lader-Ladeluftkühler-Baugruppe (10) nach einem der vorangehenden Ansprüche, **dadurch gekennzeichnet, dass** die Befestigungsvorrichtung (12) Versteifungsrippen (76) aufweist.

8. Brennkraftmaschine mit einem Kurbelgehäuse und einem Zylinderkopf, **dadurch gekennzeichnet, dass** die Brennkraftmaschine eine Lader-Ladeluftkühler-Baugruppe nach einem der vorangehenden Ansprüche aufweist.

## Claims

1. Charger-intercooler assembly (10) of an internal combustion engine, said assembly having at least two exhaust-gas turbochargers (20, 28) and an intercooler (14), wherein the first exhaust-gas turbocharger (20) is a low-pressure exhaust-gas turbocharger (20) and the second exhaust-gas turbocharger (28) is a high-pressure exhaust-gas turbocharger (28), and wherein the intercooler (14) has a fastening device (12) with a carrier plate (32) for the fastening of said intercooler to the internal combustion engine, **characterized in that** the low-pressure exhaust-gas turbocharger (20) has a low-pressure exhaust-gas turbocharger bracket (78) and the high-pressure exhaust-gas turbocharger (28) has a high-pressure exhaust-gas turbocharger bracket (80) for attachment to the internal combustion engine, wherein the charger-intercooler assembly (10) has a support device (96) for supporting the low-pressure exhaust-gas turbocharger bracket (78) of the low-pressure exhaust-gas turbocharger (20) on the carrier plate (32), and wherein the high-pressure exhaust-gas turbocharger bracket (80) is fastened to the carrier plate (32).

2. Charger-intercooler assembly (10) according to Claim 1, **characterized in that** the low-pressure exhaust-gas turbocharger can be fastened by means of the low-pressure exhaust-gas turbocharger bracket (78) to a crankcase of the internal combustion engine, whereas the high-pressure exhaust-gas turbocharger can be fastened by means of the high-pressure exhaust-gas turbocharger bracket (80) to a cylinder head (84) of the internal combustion engine.

3. Charger-intercooler assembly (10) according to Claim 1 or 2, **characterized in that** the fastening device (12) can be fastened to the crankcase or to an internal combustion engine component which is connected to the crankcase of the internal combustion engine.

4. Charger-intercooler assembly (10) according to one of the preceding claims, **characterized in that** the fastening device (12) has ducts (36, 38) for the supply of coolant to the intercooler (14).

5. Charger-intercooler assembly (10) according to Claim 4, **characterized in that** one duct (36) has an intercooler feed opening (56) and a further duct (38) has an intercooler return opening (58), wherein plug-type fitting connectors (60, 62) are formed on the intercooler feed opening (56) and/or on the intercooler return opening (58).

6. Charger-intercooler assembly (10) according to Claim 4 or Claim 4, **characterized in that** the intercooler (14) has an intercooler feed (72) and an intercooler return (74), wherein the intercooler feed (72) and/or the intercooler return (74) have/has a plug-type fitting connector.

7. Charger-intercooler assembly (10) according to one of the preceding claims, **characterized in that** the fastening device (12) has stiffening ribs (76).

8. Internal combustion engine having a crankcase and having a cylinder head, **characterized in that** the internal combustion engine has a charger-intercooler assembly according to one of the preceding claims.

## Revendications

1. Module turbocompresseur refroidisseur d'air de suralimentation (10) d'un moteur à combustion interne, qui présente au moins deux turbocompresseurs à gaz d'échappement (20, 28) et un refroidisseur d'air de suralimentation (14), le premier turbocompresseur à gaz d'échappement (20) étant un turbocompresseur à gaz d'échappement basse pression (20) et le deuxième turbocompresseur à gaz d'échappement (28) étant un turbocompresseur à gaz d'échappement haute pression (28) et le refroidisseur d'air de suralimentation (14) présentant un dispositif de fixation (12) avec une plaque porteuse (32) pour la fixation de celui-ci au moteur à combustion interne, **caractérisé en ce que** le turbocompresseur à gaz d'échappement basse pression (20) présente un dispositif de fixation de turbocompresseur à gaz d'échappement basse pression (78) et le turbocompresseur à gaz d'échappement haute pression (28) présente un dispositif de fixation de turbocompresseur à gaz d'échappement haute pression (80) pour le montage sur le moteur à combustion interne, le module turbocompresseur refroidisseur d'air de suralimentation (10) présentant un dispositif de support (96) pour le support du dispositif de fixation de turbocompresseur à gaz d'échappement basse pression (78) du turbocompresseur à gaz d'échappement basse pression (20) sur la plaque porteuse (32) et le dispositif de fixation de turbocompresseur à gaz d'échappement haute pression (80) étant fixé à la plaque porteuse (32).

2. Module turbocompresseur refroidisseur d'air de suralimentation (10) selon la revendication 1, **caractérisé en ce que** le turbocompresseur à gaz d'échappement basse pression peut être fixé au moyen du dispositif de fixation de turbocompresseur à gaz d'échappement basse pression (78) à un carter de vilebrequin du moteur à combustion interne, tandis que le turbocompresseur à gaz d'échappement haute pression peut être fixé au moyen du dispositif de fixation de turbocompresseur à gaz d'échappement haute pression (80) à une culasse (84) du moteur à combustion interne.

3. Module turbocompresseur refroidisseur d'air de suralimentation (10) selon la revendication 1 ou 2, **caractérisé en ce que** le dispositif de fixation (12) peut être fixé au carter de vilebrequin ou à un composant du moteur à combustion interne en liaison avec le carter de vilebrequin du moteur à combustion interne.

4. Module turbocompresseur refroidisseur d'air de suralimentation (10) selon l'une quelconque des revendications précédentes, **caractérisé en ce que** le dispositif de fixation (12) présente des canaux (36, 38) pour l'alimentation du refroidisseur d'air de suralimentation (14) en réfrigérant.

5. Module turbocompresseur refroidisseur d'air de suralimentation (10) selon la revendication 4, **caractérisé en ce qu'**un canal (36) présente une ouverture d'afflux (56) pour le refroidisseur d'air de suralimentation et un canal supplémentaire (38) présente une ouverture de retour (58) pour le refroidisseur d'air de suralimentation, des raccords d'ajustement par enfichage (60, 62) étant réalisés au niveau de l'ouverture d'afflux (56) pour le refroidisseur d'air de suralimentation et/ou au niveau de l'ouverture de retour (58) pour le refroidisseur d'air de suralimentation.

6. Module turbocompresseur refroidisseur d'air de suralimentation (10) selon la revendication 4 ou la revendication 4, **caractérisé en ce que** le refroidisseur d'air de suralimentation (14) présente un afflux (72) pour le refroidisseur d'air de suralimentation et un retour (74) pour le refroidisseur d'air de suralimentation, l'afflux (72) pour le refroidisseur d'air de suralimentation et/ou le retour (74) pour le refroidisseur d'air de suralimentation présentant un raccord d'ajustement par enfichage.

7. Module turbocompresseur refroidisseur d'air de suralimentation (10) selon l'une quelconque des revendications précédentes, **caractérisé en ce que** le dispositif de fixation (12) présente des nervures de renforcement (76).

8. Moteur à combustion interne comprenant un carter de vilebrequin et une culasse, **caractérisé en ce que** le moteur à combustion interne présente un module turbocompresseur refroidisseur d'air de suralimentation selon l'une quelconque des revendications précédentes.
